# EUROPÄISCHE PATENTSCHRIFT

(11) **EP 1 185 954 B1**
(45) Veröffentlichungstag und Bekanntmachung des Hinweises auf die Patenterteilung: **25.06.2003**
(21) Anmeldenummer: 00920671.5
(22) Anmeldetag: 06.04.2000
(51) Int. Cl.: G06K 19/077

(54) **CHIP-TRÄGER-VERBUND**
COMPOSITE CHIP-CARRIER
SUPPORT COMPOSITE POUR PUCE

(30) Priorität: 30.04.1999 EP 99108708
(43) Veröffentlichungstag der Anmeldung: 13.03.2002
(73) Patentinhaber: Infineon Technologies AG, 81669 München (DE)
(72) Erfinder: REINER, Robert, D-85579 Neubiberg (DE)
(74) Vertreter: Epping Hermann & Fischer
(86) Internationale Anmeldenummer: EP0003080
(87) Internationale Veröffentlichungsnummer: WO00067198

(56) Entgegenhaltungen:
- EP-A- 0 463 871
- US-A- 4 463 971
- US-A- 5 026 452

## Beschreibung

Die Erfindung betrifft einen Chip-Träger-Verbund, in welchem ein Halbleiterchip in einem dünnen Trägermaterial aus Papier oder einer dünnen Kunststoffolie eingebettet ist.

Bekannt sind beispielsweise Chip-Träger-Verbünde, bei denen dünne Halbleiterchips während des Schöpfens in ein Papier eingebettet werden. Derartige Verbünde haben jedoch einige Nachteile. Zum einen ist die Herstellung der Verbünde nur beim Herstellers des Trägermaterials, hier beim Papierhersteller, möglich. Zum anderen ist der Halbleiterchip in den Verbünden nur schlecht gegen Einflüsse von außen geschützt.

Um in Papier oder sonstiges Trägermaterial eingebettet werden zu können, muß der Halbleiterchip sehr dünn sein. Er ist deshalb sehr bruchgefährdet. Außerdem bietet das den Halbleiterchip umgebende Trägermaterial nur unzureichenden Schutz gegen Einwirkungen von außen, seien es solche mechanischer oder chemischer Natur, Temperatureinflüsse oder elektrische Einwirkungen.

Ein weiterer Nachteil besteht darin, daß der Halbleiterchip im Trägermaterial nur schwer exakt zu positionieren ist.

In der EP 0 463 871 A2 ist eine Smart-card beschrieben, bei der der IC-Chip in einer Aussparung eines Kartenkörpers aus Epoxidharz von etwa derselben Dicke wie der IC-Chip angeordnet und mit einem auf der Unterseite angeklebten Aluminiumfilm befestigt ist.

In der US 5,026,452 ist ein Herstellungsverfahren für Chipkarten beschrieben, bei dem der Kartenkörper als Laminat hergestellt wird und der IC-Chip unter Einsatz einer dünnen Klebeschicht auf einer untersten Kernschicht befestigt und in Aussparungen der übrigen Kernschichten angeordnet wird.

Aufgabe der Erfindung ist es, einen Chip-Träger-Verbund anzugeben, welcher auf einfache Art und Weise und unabhängig vom Ort der Herstellung des Trägermaterials aus Papier oder einer dünnen Kunststoffolie herstellbar ist und in welchem der Halbleiterchip möglichst gut gegen negative äußere Einflüsse geschützt und zudem in einer vorgegebenen Position im Trägermaterial exakt positioniert ist.

Die Lösung der Aufgabe gelingt mit dem Chip-Träger-Verbund gemäß Anspruch 1. Bevorzugte Varianten des Verbundes sind in den Unteransprüchen beschrieben.

In dem erfindungsgemäßen Chip-Träger-Verbund ist der Halbleiterchip in einer Ausnehmung, welche sich über die gesamte Dicke des Trägermaterials aus Papier oder einer dünnen Kunststoffolie erstreckt, angeordnet. Die Ausnehmung ist zumindest auf einer der Seiten des Trägermaterials mit einem Abdeckpad bedeckt. Die Randbereiche dieses Abdeckpads sind auf dem Trägermaterial befestigt. Der in der Ausnehmung des Trägermaterials angeordnete Halbleiterchip wiederum ist auf dem Abdeckpad befestigt.

Bevorzugt werden zu beiden Seiten des Halbleiterchips Abdeckpads an dem Trägermaterial befestigt.
Die Befestigung der Abdeckpads und/oder des Halbleiterchips erfolgt zweckmäßig mit einem Klebstoff. Besonders bevorzugt ist es, wenn selbstklebende Abdeckpads verwendet werden, die auch als Klebeflicken bezeichnet werden könnten.

Die erfindungsgemäße Anordnung des Halbleiterchips im Trägermaterial hat einerseits den Vorteil, daß der Halbleiterchip sehr exakt positioniert werden kann, da die Ausnehmung im Trägermaterial mit hoher Genauigkeit herstellbar ist. Zweckmäßig ist die Ausnehmung nur minimal größer als die Grundfläche des einzusetzenden Halbleiterchips, so daß dieser nach dem Einsetzen in der gewünschten Position im Verbund angeordnet ist.

Ein weiterer Vorteil besteht andererseits darin, daß der Halbleiterchip dicker sein kann, als dies bei den Halbleiterchips der Fall war, welche während des Papierschöpfens in den Papierträger eingebettet wurden. Es ist beispielsweise möglich, einen Chip mit einer dickeren Passivierung zu versehen, die den Halbleiterchip besser gegen chemische oder mechanische Einflüsse von außen schützt, da die Ausnehmung im Trägermaterial auch für einen dickeren Chip Platz bietet.

Der Schutz gegen mechanische oder chemische Einflüsse kann weiterhin dadurch verbessert werden, daß für die Abdeckpads geeignete Materialien gewählt werden. Die Auswahl kann beispielsweise so erfolgen, daß die Abdeckpads den Bereich des Chip-Träger-Verbundes, in welchem sich der Chip befindet, versteifen und so den Chip zusätzlich vor Bruch schützen. Außerdem ist es möglich, die Abdeckpads aus einem möglichst undurchlässigen Material zu fertigen. Auf diese Weise kann der Einfluß von Chemikalien auf den Halbleiterchip deutlich vermindert werden, die Diffusion von Ionen zum Chip wird verhindert.

Grundsätzlich geeignete Materialien für die Abdeckpads sind Papier oder Kunststoffolie. Besonders geeignet sind solche Folien, die zur Herstellung von Hologrammen bei Chipkarten oder sonstigen Anwendungen eingesetzt werden.

Um einen besonders steifen und festen Verbund zu erhalten und um die Dicke des Verbundes durch das Aufbringen der Abdeckpads nicht zu stark zu erhöhen, kann es bevorzugt sein, das wenigstens eine Abdeckpad in das Trägermaterial einzudrücken. Zweckmäßig wird das wenigstens eine Abdeckpad so weit in das Trägermaterial eingedrückt, daß der Chip-Träger-Verbund eine im wesentlichen plane Oberfläche erhält. Die Dicke des Halbleiterchips ist in diesem Fall zweckmäßig geringer als die Dicke des Trägermaterials.

Als Halbleiterchips für den erfindungsgemäßen Chip-Träger-Verbund eignen sich insbesondere solche, welche eine kontakt lose Datenübertragung zu einem Lese/Schreibgerät ermöglichen. Derartige Halbleiterchips sind grundsätzlich bekannt. Sie weisen üblicherweise eine Spule auf einer der Chipoberflächen auf ("coil on chip").

Zum Schutz gegen elektrische, elektrostatische oder elektromagnetische Einflüsse kann das wenigstens eine Abdeckpad des erfindungsgemäßen Chip-Träger-Verbundes leitfähig sein. Beispielsweise ist es möglich, das Abdeckpad mit einer leitfähigen, insbesondere einer metallischen, Schicht zu versehen. Die leitfähige Schicht kann die gesamte Oberfläche des Abdeckpads bedecken. Im folgenden sollen unter leitfähigen Schichten aber auch solche Schichten verstanden werden, welche nur einen Teil der Fläche des Abdeckpads einnehmen.

Beispielsweise kann die leitfähige Schicht auf dem Abdeckpad in Form einer Spule ausgebildet sein, welche mit einer Spule auf dem Halbleiterchip induktiv gekoppelt ist. Da das Abdeckpad eine größere Oberfläche aufweist als der Halbleiterchip, kann auch die Spule, wenn sie im Randbereich des Abdeckpads verläuft, größer sein als die Spule auf der Chipoberfläche. Mit Hilfe der Spule auf dem Abdeckpad kann also erreicht werden, daß die Spule auf dem Halbleiterchip in einem verstärkten Feld liegt.

Andererseits ist es möglich, die leitfähige Schicht auf dem Abdeckpad in Form eines Bandes auszubilden, welches den Halbleiterchip im wesentlichen vollständig umläuft. Insbesondere kann die leitfähige Schicht in Form eines ringförmigen Bandes gestaltet sein, welches außerhalb desjenigen Bereiches verläuft, mit welchem das Abdeckpad den Halbleiterchip bedeckt. Das leitfähige Band kann im Falle einer elektrostatischen Entladung den Strom um den Chip herumführen und so dessen Zerstörung verhindern. Arbeitet der Chip mit induktiver Übertragung, kann es zweckmäßig sein, das leitfähige Band nicht in sich geschlossen um den Halbleiterchip herumzuführen, sondern in Umfangsrichtung eine Unterbrechung des Bandes vorzusehen.

Ein weiterer Schutz gegen mechanische Beanspruchungen kann dadurch erreicht werden, daß im Trägermaterial im Bereich um die Ausnehmung, in welcher der Halbleiterchip angeordnet ist, Poren oder Durchgangsöffnungen vorhanden sind. Diese Poren oder Durchgangsöffnungen führen zu einer Versteifung des Trägermaterials in diesem Bereich.
Besonders zweckmäßig ist es, wenn die Poren oder Durchgangsöffnungen mit Klebstoff gefüllt sind, da dies zusätzliche Steifigkeit verleiht. Verwendet man als Klebstoff einen leitfähigen Klebstoff, kann zusätzlich eine leitende Verbindung zwischen sich gegenüberliegenden Abdeckpads erreicht werden. Diese Variante ist besonders zweckmäßig, wenn durch die mit leitfähigem Klebstoff gefüllten Poren oder Durchgangsöffnungen eine leitende Verbindung zwischen leitfähigen Bereichen sich gegenüberliegender Abdeckpads hergestellt wird. Beispielsweise können auf die beschriebene Art und Weise elektrisch leitfähige Bänder miteinander kontaktiert werden, die auf zwei zu beiden Seiten des Halbleiterchips angeordneten Abdeckpads vorhanden sind.

Die Erfindung soll nachfolgend am Beispiel einer Zeichnung näher erläutert werden. Darin zeigen schematisch
- Fig. 1 bis 5: Beispiele erfindungsgemäßer Chip-Träger-Verbünde im Querschnitt und
- Fig. 6: den erfindungsgemäßen Chip-Träger-Verbund gemäß Fig. 4 in Draufsicht.

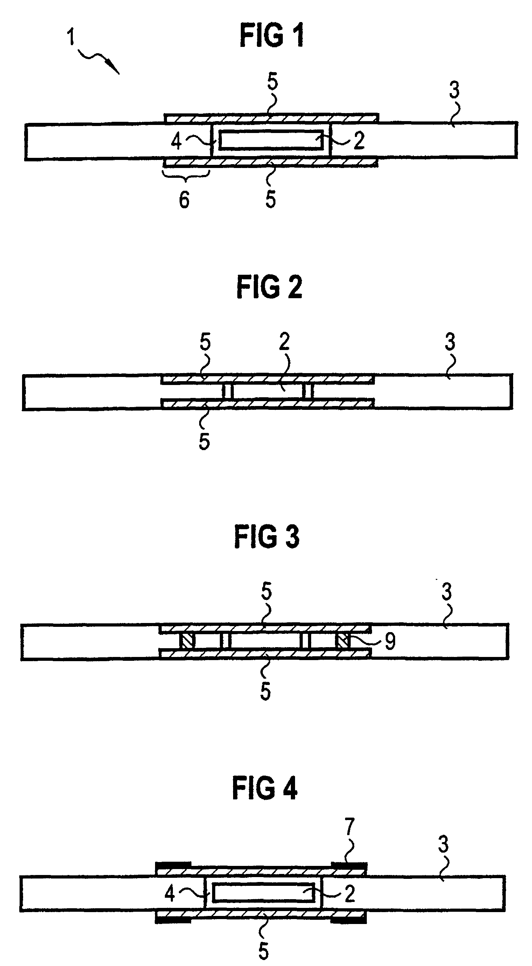

Fig. 1 zeigt ein erstes Beispiel eines erfindungsgemäßen Chip-Träger-Verbundes 1 im Querschnitt durch den Bereich, in welchem der Halbleiterchip 2 angeordnet ist. Der Halbieiterchip 2 befindet sich in einer Ausnehmung 4, welche in das Trägermaterial 3, hier ein dünnes Papier, eingestanzt wurde.

Die Ausnehmung 4 ist nur geringfügig größer als die Außenkontur des Halbleiterchips 2. Auf diese Weise ist eine sehr genaue Positionierung des Halbleiterchips im Trägermaterial möglich. Der Halbleiterchip ist mit Hilfe von zwei Abdeckpads 5 im Trägermaterial fixiert. Die Abdeckpads 5 sind ober- und unterseitig des Halbleiterchips 2 auf das Trägermaterial 3 aufgeklebt, wobei die Randbereiche 6 der Abdeckpads mit dem Trägermaterial verbunden sind, die Mittelbereiche mit dem Halbleiterchip. Im gezeigten Fall sind die Abdeckpads selbstklebend, die Klebeschicht ist jedoch nicht eingezeichnet. Zweckmäßig wird das in der Figur untere Abdeckpad vor dem Einsetzen des Halbleiterchips in die Ausnehmung am Trägermaterial befestigt, das obere der Abdeckpads nach dem Einsetzen des Halbleiterchips.

Fig. 2 zeigt einen erfindungsgemäßen Chip-Träger-Verbund, welcher im wesentlichen demjenigen aus Fig. 1 entspricht. Gleich Bezugszeichen bezeichnen in dieser und allen nachfolgenden Figuren gleiche Teile wie in Fig. 1. Bereits beschriebene Einzelheiten sollen zur Vermeidung von Wiederholungen nicht mehr erwähnt werden. Die Abdeckpads 5 sind, im Unterschied zum Verbund vom Fig. 1, in das Trägermaterial 3 eingedrückt, so daß der Chip-Träger-Verbund 1 auf Ober- und Unterseite jeweils eine im wesentlichen plane Oberfläche erhält. Durch das Einpressen der Abdeckpads kann zusätzlich eine erhöhte Steifigkeit des Verbunds und eine noch sicherere Befestigung des Halbleiterchips erreicht werden.

Zur weiteren Erhöhung der Steifigkeit sind in dem Chip-Träger-Verbund gemäß Fig. 3 im Trägermaterial 3 im Bereich um die Ausnehmung 4 Durchgangsöffnungen 9 angeordnet. Diese Durchgangsöffnungen sind mit Klebstoff gefüllt, der beim Zusammenpressen der Abdeckpads in die Durchgangsöffnungen gedrückt wird.

Fig. 4 zeigt ein weiteres Beispiel eines erfindungsgemäßen Chip-Träger-Verbundes, welcher erneut weitgehend demjenigen in Fig. 1 entspricht. Zusätzlich ist jedoch auf jedem der Abdeckpads 5 in dessen Randbereich ein leitfähiges Band 7 angeordnet. Im Chip-Träger-Verbund gemäß Fig. 4 verlaufen die leitfähigen Bänder 7 jeweils auf der Seite des Abdeckpads 5, welche dem Halbleiterchip 2 abgewandt ist.

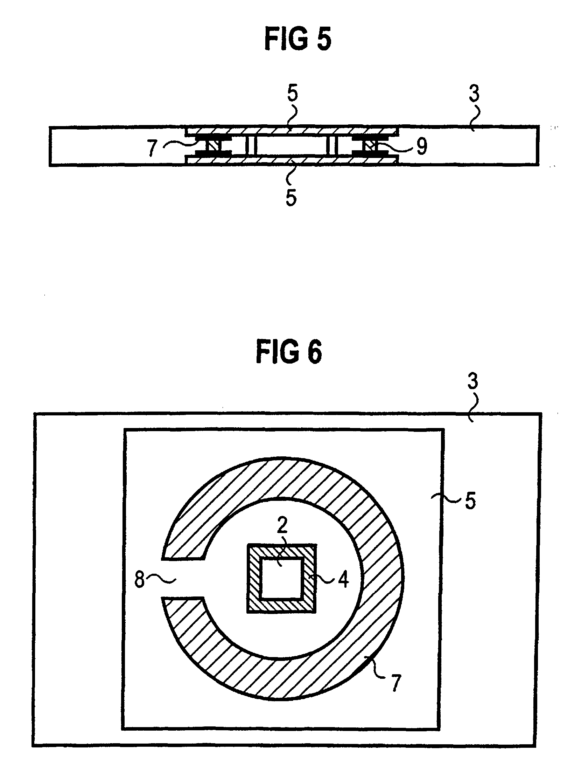

Im Chip-Träger-Verbund gemäß Fig. 5 sind die leitfähigen Bänder 7 dagegen jeweils auf der Seite des Abdeckpads 5 angebracht, welche in Richtung auf den Halbleiterchip 2 weist.
In beiden in Fig. 4 und 5 gezeigten Fällen ist das leitfähige Band 7 ringförmig ausgebildet, was Fig. 6 zu entnehmen ist, welche eine Draufsicht auf den Verbund gemäß Fig. 4 zeigt. Die Bänder 7 sind jedoch nicht vollständig geschlossen, sondern weisen in Umfangsrichtung eine Unterbrechung 8 auf. Auf diese Weise kann verhindert werden, daß die leitfähigen Ringe 7 die induktive Übertragung zwischen Halbleiterchip und einem Lese/Schreibgerät negativ beeinflussen. Die leitfähigen Bänder 7 dienen dem Schutz des Halbleiterchips vor Zerstörung durch elektrostatische Entladung.

Die in Fig. 5 gezeigte Ausführungsform hat weiterhin den Vorteil, daß die ringförmigen leitfähigen Bänder 7 der sich gegenüberliegenden Abdeckpads 5 elektrisch miteinander kontaktiert sind. Dies geschieht mit Hilfe der Durchgangsöffnungen 9 im Trägermaterial 3, welche mit einem elektrisch leitfähigen Klebstoff gefüllt sind.

## Patentansprüche

1. Chip-Träger-Verbund (1)
mit einem dünnen Trägermaterial (3) mit einer Ausnehmung (4), welche sich über die gesamte Dicke des Trägermaterials erstreckt,
mit einem Halbleiterchip (2), der in der Ausnehmung angeordnet ist,
mit wenigstens einem Abdeckpad (5), das auf einer Seite des Trägermaterials den Halbleiterchip (2) und einen Anteil des Trägermaterials bedeckt und das mit Randbereichen (6) einer dem Halbleiterchip zugewandten Oberfläche auf diesem Anteil des Trägermaterials (3) befestigt ist, wobei der Halbleiterchip (2) auf dem Abdeckpad (5) befestigt ist,
**dadurch gekennzeichnet, dass**
das Trägermaterial Papier oder Kunststofffolie ist.

2. Chip-Träger-Verbund gemäß Anspruch 1,
**dadurch gekennzeichnet, dass**
das wenigstens eine Abdeckpad (5) und/oder der Halbleiterchip (2) mit einem Klebstoff befestigt sind.

3. Chip-Träger-Verbund gemäß Anspruch 1 oder 2,
**dadurch gekennzeichnet, dass**
das wenigstens eine Abdeckpad (5) aus Papier oder Kunststofffolie besteht.

4. Chip-Träger-Verbund gemäß einem der Ansprüche 1 bis 3,
**dadurch gekennzeichnet, dass**
das wenigstens eine Abdeckpad (5) so weit in das Trägermaterial (3) eingedrückt ist, dass der Chip-Träger-Verbund eine im Wesentlichen plane Oberfläche besitzt.

5. Chip-Träger-Verbund gemäß einem der Ansprüche 1 bis 4,
**dadurch gekennzeichnet, dass**
das wenigstens eine Abdeckpad (5) mit einer elektrisch leitfähigen Schicht in Form einer Spule versehen ist, welche mit einer Spule auf dem Halbleiterchip (2) induktiv gekoppelt ist.

6. Chip-Träger-Verbund gemäß einem der Ansprüche 1 bis 4,
**dadurch gekennzeichnet, dass**
das wenigstens eine Abdeckpad (5) mit einer elektrisch leitfähigen Schicht zum Schutz gegen elektrische, elektrostatische oder elektromagnetische Einflüsse versehen ist.

7. Chip-Träger-Verbund gemäß Anspruch 5 oder 6,
**dadurch gekennzeichnet, dass**
die leitfähige Schicht außerhalb desjenigen Bereiches des Abdeckpads (5), der den Halbleiterchip (2) bedeckt, in Form eines Bandes (7) ausgebildet ist, das den Halbleiterchip im Wesentlichen vollständig umläuft.

8. Chip-Träger-Verbund gemäß Anspruch 7,
**dadurch gekennzeichnet, dass**
das Band (7) in Umfangsrichtung eine Unterbrechung (8) aufweist.

9. Chip-Träger-Verbund gemäß einem der Ansprüche 1 bis 8,
**dadurch gekennzeichnet, dass**
zu dem genannten ersten Abdeckpad (5) ein zweites Abdeckpad (5) vorhanden ist, das auf einer dem ersten Abdeckpad gegenüberliegenden Seite des Trägermaterials den Halbleiterchip (2) und einen Anteil des Trägermaterials bedeckt und das mit Randbereichen (6) einer dem Halbleiterchip zugewandten Oberfläche auf diesem Anteil des Trägermaterials (3) befestigt ist.

10. Chip-Träger-Verbund gemäß Anspruch 9,
**dadurch gekennzeichnet, dass**
im Trägermaterial (3) im Bereich um die Ausnehmung (4) und zwischen den Abdeckpads (5) Poren oder Durchgangsöffnungen (9) vorhanden sind, die mit Klebstoff gefüllt sind.

11. Chip-Träger-Verbund gemäß Anspruch 10,
**dadurch gekennzeichnet, dass**
der Klebstoff elektrisch leitfähig ist und dadurch eine leitende Verbindung zwischen sich gegenüberliegenden leitfähigen Bereichen der Abdeckpads hergestellt ist.

## Claims

1. Chip carrier assembly (1) with a thin substrate (3), having a recess (4) which extends over the entire thickness of the substrate, with a. semiconductor chip (2), which is arranged in the recess, with at least one covering pad (5), which on one side of the substrate covers the semiconductor chip (2) and a portion of the substrate and which is fastened on this portion of the substrate (3) by edge regions (6) of a surface facing the semiconductor chip, the semiconductor chip (2) being fastened on the covering pad (5), **characterized in that** the substrate is paper or plastic film.

2. Chip carrier assembly according to Claim 1, **characterized in that** the at least one covering pad (5) and/or the semiconductor chip (2) are fastened with an adhesive.

3. Chip carrier assembly according to Claim 1 or 2, **characterized in that** the at least one covering pad (5) consists of paper or plastic film.

4. Chip carrier assembly according to one of Claims 1 to 3, **characterized in that** the at least one covering pad (5) is pressed into the substrate (3) so far that the chip carrier assembly has a substantially planar surface.

5. Chip carrier assembly according to one of Claims 1 to 4, **characterized in that** the at least one covering pad (5) is provided with an electrically conductive layer in the form of a coil which is inductively coupled to a coil on the semiconductor chip (2).

6. Chip carrier assembly according to one of Claims 1 to 4, **characterized in that** the at least one covering pad (5) is provided with an electrically conductive layer for protection against electrical, electrostatic or electromagnetic influences.

7. Chip carrier assembly according to Claim 5 or 6, **characterized in that** the conductive layer outside that region of the covering pad (5) which covers the semiconductor chip (2) takes the form of a band (7), which runs substantially completely around the semiconductor chip.

8. Chip carrier assembly according to Claim 7, **characterized in that** the band (7) has an interruption in the circumferential direction.

9. Chip carrier assembly according to one of Claims 1 to 8, **characterized in that** said first covering pad (5) has an associated second covering pad (5), which on a side of the substrate opposite the first covering pad covers the semiconductor chip (2) and a portion of the substrate and which is fastened on this portion of the substrate (3) by edge regions (6) of a surface facing the semiconductor chip.

10. Chip carrier assembly according to Claim 9, **characterized in that** in the substrate (3) there are adhesive-filled pores or through-openings (9) in the region around the recess (4) and between the covering pads (5).

11. Chip carrier assembly according to Claim 10, **characterized in that** the adhesive is electrically conductive and, as a result, a conducting connection is established between the opposite conductive regions of the covering pads.

## Revendications

1. Composite (1) puce-support
comprenant un matériau (3) mince formant support, ayant un évidement (4) qui s'étend sur toute l'épaisseur du matériau formant support,
ayant une puce (2) à semi-conducteur, qui est disposée dans l'évidement,
ayant au moins une pastille (5) de recouvrement, qui recouvre d'un côté du matériau formant support la puce (2) à semi-conducteur et une partie du matériau formant support et qui est fixée par des zones (6) marginales d'une surface tournée vers la puce à semi-conducteur sur cette partie du matériau (3) formant support, la puce (2) à semi-conducteur étant fixée à la pastille (5) de recouvrement,
**caractérisé en ce que** le matériau formant support est du papier ou est une feuille de matière plastique.

2. Composite puce-support suivant la revendication 1,
**caractérisé en ce que** la au moins une pastille (5) de recouvrement et/ou la puce (2) à semi-conducteur sont fixées par une colle.

3. Composite puce-support suivant la revendication 1 ou 2,
**caractérisé en ce que** la au moins une pastille (5) de recouvrement est en papier ou en une feuille de matière plastique.

4. Composite puce-support suivant l'une des revendications 1 à 3,
**caractérisé en ce que** la au moins une pastille (5) de recouvrement est enfoncée si profondément dans le matériau (3) formant support que le composite puce-support a une surface sensiblement plane.

5. Composite puce-support suivant l'une des revendications 1 à 4,
**caractérisé en ce que** la au moins une pastille (5) de recouvrement est munie d'une couche conductrice de l'électricité sous la forme d'une bobine, qui est couplée inductivement à une bobine sur la puce (2) à semi-conducteur.

6. Composite puce-support suivant l'une des revendications 1 à 4,
**caractérisé en ce que** la au moins une pastille (5) de recouvrement est munie d'une couche conductrice de l'électricité de protection vis à vis des influences électriques, électrostatiques ou électromagnétiques.

7. Composite puce-support suivant la revendication 5 ou 6,
**caractérisé en ce que** la couche conductrice est constituée, à l'extérieur de la partie de la pastille (5) de recouvrement qui recouvre la puce (2) à semi-conducteur, sous la forme d'une bande (7) qui entoure sensiblement entièrement la puce à semi-conducteur.

8. Composite puce-support suivant la revendication 7,
**caractérisé en ce que** la bande (7) a une interruption (8) dans la direction périphérique.

9. Composite puce-support suivant l'une des revendications 1 à 8,
**caractérisé en ce qu'**il est prévu par rapport à ladite première pastille (5) de recouvrement une deuxième pastille (5) de recouvrement qui recouvre, du côté du matériau formant support opposé à la première pastille de recouvrement, la puce (2) à semi-conducteur et une partie du matériau formant support et qui est fixée par des zones (6) de bord d'un surface tournée vers la puce à semi-conducteur à cette partie du matériau (3) formant support.

10. Composite puce-support suivant la revendication 9,
**caractérisé en ce qu'**il est prévu dans le matériau (3) formant support dans la région entourant l'évidement (4) et entre les pastilles (5) de recouvrement des pores ou des ouvertures (9) de passage qui sont emplis de colle.

11. Composite puce-support suivant la revendication 10,
**caractérisé en ce que** la colle est conductrice de l'électricité et ménage ainsi une liaison conductrice entre des zones conductrices opposées de la partie de recouvrement.
